# EUROPEAN PATENT SPECIFICATION

(11) **EP 2 891 197 B1**
(45) Date of publication and mention of the grant of the patent: **14.11.2018**
(21) Application number: 13762348.4
(22) Date of filing: 30.08.2013
(51) Int. Cl.: H01M 2/10, H01M 10/42, H01M 2/20, H01M 2/22, H01M 2/02, H01M 4/66, H01M 10/0525

(54) **MIXTURE FOR ABATING COMBUSTION BY A LI-ION BATTERY**
MISCHUNG ZUR UNTERDRÜCKUNG DER VERBRENNUNG DURCH EINE LI-IONEN-BATTERIE
MÉLANGE PERMETTANT D'ATTÉNUER LA COMBUSTION RÉALISÉE PAR UNE BATTERIE LITHIUM-ION

(30) Priority: 30.08.2012 US 201261694901 P; 21.09.2012 US 201261703948 P
(43) Date of publication of application: 08.07.2015
(73) Proprietor: The Chemours Company FC, LLC, Wilmington DE 19801 (US)
(72) Inventor: KOUNTZ, Dennis, J., West Chester, Pennsylvania 19382 (US); HOOVER, James, R., Newark, Delaware 19711 (US); PRUCE, George, Martin, Glastonbury, Connecticut 06033 (US)
(74) Representative: Dehns
(86) International application number: PCT/US2013/057447
(87) International publication number: WO 2014/036360

(56) References cited:
- EP-A1- 2 450 998
- JP-A- 2003 238 821
- US-A- 5 214 343
- US-A1- 2004 219 424
- US-A1- 2007 117 935

## Description

### FIELD OF THE INVENTION

This invention relates to the abatement of combustion stemming from a Li-ion battery that has been compromised such as by short circuiting.

### BACKGROUND OF THE INVENTION

A lithium-ion battery (Li-ion battery) is a battery in which lithium ions move between oppositely charged electrodes to generate electricity.

The corrupting (malfunctioning) of a Li-ion battery, such as by short circuiting within the battery, is known to be capable of producing a run-away thermal reaction that vaporizes combustible components within the battery, especially from the electrolyte separating each anode from each cathode of the battery. Combustion of the battery involves ignition of the combustible vapors, especially upon reaching oxygen present in air that comes into contact with the combustible vapors, either within the battery pack case within which the battery is housed or exterior to the battery pack from which the combustible vapors escape.

In an effort to stop the flow of electricity to the compromised battery, battery packs have been equipped with fusing that stops electricity flow upon an excessive rise in temperature caused by the run-away thermal reaction within the battery.

Because the electrical approach has not always been effective in abating the combustion, various other techniques have been tried.

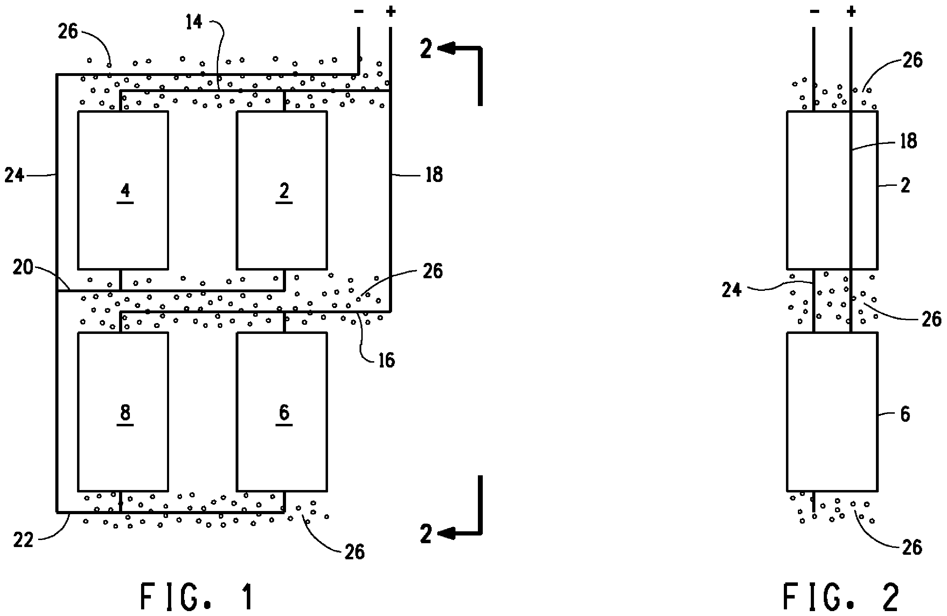

U.S. 2011/0177366 discloses the formation of the case of the battery pack as a laminate of (i) a heat conductive layer of metal or resin having high heat conductivity such as an engineering plastic and (ii) a heat absorbing layer of resin materials, ceramic materials or inorganic materials. Layer (i) forms the outside of the case and layer (ii) forms the inside of the case, so that the heat absorbed by layer (ii) is conducted away from the interior of the batter pack case by layer (i). Fluorocarbon resin is disclosed as a possible material for layer (ii), and polytetrafluoroethylene (PTFE) is disclosed as an example of resin having superior heat resistance. The PTFE heat absorbing layer is disclosed to contain 20 to 70 parts by weight of particulate material called material B dispersed therein, and the PTFE is disclosed to have excellent binding property [0073-0074]. The function of the particulate material B in layer (ii) is to undergo a heat decomposition reaction, which absorbs heat and expands the layer (ii) to form an insulating layer to protect electronic devices outside the battery pack case [0071]. Sodium hydrogen carbonate and aluminum hydroxide are disclosed as examples of material B. As apparent compensation of the insulating effect of the insulating layer (ii) after heating, the battery pack is also provided with a sinusoidal conduit 25 (Fig. 2) for allowing escape of hot gases from the interior of the battery pack case and air cooling this gas as it flows along the length of the conduit. The approach of this patent publication is to try to avoid emission of a high temperature inflammable gas from the inside of the battery pack by limiting the temperature rise within the battery pack and cooling the gas escaping from the battery pack.

U.S. 2009/0176148 discloses the immersion of batteries into a container filled with a heat transfer fluid, and containing a heat exchanger at least partially filled with the heat transfer fluid, wherein the fluid is a liquid or gas, such as water, glycols, perfluorocarbons, perfluoropolyethers, perfluoroamines, perfluoroethers, silicone oil and hydrocarbon oils and the heat exchanger contributes the removal of heat from the immersed batteries [0037]. In another embodiment, the heat transfer fluid is a hydrofluoroether that has a low boiling temperature, e.g. less than 80°C or even less than 50°C [0036], the vaporization of this fluid contributing to the heat removal from the immersed batteries [0032]. A disadvantage of this approach to improving the safety of batteries, i.e. combustion abatement, is the reliance on gas and/or liquid as the transfer fluid. Gas or liquids within the battery pack case are prone to escape upon any opening being formed in the case, such as by subjecting the case to an impact.

U.S. 2010/0047673 discloses filling the space between the battery pack case and the batteries containing within the case with a non-flammable filling material so as to exclude air from the inside of the case. In one embodiment, liquid or gas is used as the filling material and either contained within a polypropylene bag or absorbed into a high polymer to provide a gel-like material [0048]. Example 12 discloses the preparation of a filling material by kneading 90 w% magnesium hydrogen carbonate powder that releases carbon dioxide when overheated, with 10 wt% PTFE having a bonding effect in a mortar, the resulting mixture then being molded into pellets, which then becomes the filling material within the battery case [0081]. One skilled in the art knows that for the PTFE to have a bonding effect, the PTFE must be the fine powder type, made by aqueous dispersion polymerization, followed by coagulation of the dispersed PTFE particles, the resulting coagulum being called the fine powder type of PTFE. This PTFE fine powder, prior to sintering, fibrillates when subject to shear as occurs in mixing in a mortar. The fibrils making up the fibrillated PTFE act as a bonding agent for particulate material such as the magnesium hydrogen carbonate used in Example 12. It is clear that in this application, the PTFE is used for its bonding ability, with the magnesium hydrogen carbonate being the fire suppressant in the filling material.

U.S. 2007/01179358 discloses a core/shell polymer for abating combustion, comprising a core of FEP copolymer as described in more detail hereinafter and a shell of perfluoroalkoxy (PFA) resin. U.S. Pat. No. 5 214 343 discloses a sonic coupling fluid for an ultrasonic transducer, comprising a fluoropolyether oil thickened to a grease-like consistency by a thermally stable tetrafluoroethylene (TFE) telomer. U.S. 2004/0219424 discloses abating combustion in a battery by positioning PFA resin with respect to said battery.

Flame retardant additives for liquid and solid electrolytes are disclosed in EP 2 450 998 A1 and JP 2003 238821 A, comprising fluoropolyethers and fluorine-containing phosphoric esters, respectively.

There is still a need for an effective way of abating combustion by a Li-ion battery.

### SUMMARY OF THE INVENTION

The present invention satisfies this need by providing, in one embodiment, a new combustion abatement composition for abating the combustion by a Li-ion battery, as defined in Claim 1. This mixture is useful for improving the safety of Li-ion batteries by its abatement effect of preventing or extinguishing combustion by the battery. The mixture can serve as a last line of defense against combustion should other safety features associated with the battery, e.g. fusing, fail.

Another embodiment of the present invention is the process for abating the combustion of a Li-ion battery, as defined in Claim 4. In one aspect of this embodiment, the battery has an electrical connector and the positioning of the mixture includes forming a coating of said mixture at least on said electrical connector. An electrical connector includes more than one connector as would be expected since the battery has an anode and cathode. In another aspect of this embodiment, the positioning of the mixture includes forming a coating of said mixture on at least a portion of said battery. In still another aspect of this embodiment, both the electrical connector and at least a portion of the battery are coated by the mixture.

The mixture and process of the present invention is applicable to one or more Li-ion batteries interconnected to provide electricity, i.e. the positioning of the mixture is applied to each battery present as may be contained within a battery pack case to form a battery pack.

In each of these embodiments, the fluoropolymer and fluoropolyether are different from one another. Chemical differences will be discussed hereinafter. With respect to difference in state, while the fluoropolymer is solid, it is preferred that the fluoropolyether has a low molecular weight such that when mixed with the solid fluoropolymer, the resultant mixture is semi-solid in state or simply, semi-solid.

By semi-solid (semi-solid state) is meant, that the mixture is neither a gas nor a liquid at the temperatures that the Li-ion battery (and battery pack) might be expected to encounter either in use or in recharging, when the battery is a rechargeable battery. Such temperatures include temperatures up to 40°C, sometimes up to 50°C and higher, e.g. temperatures up to 60°C and even up to 80°C. The semi-solid state of the mixture differs from the liquid state by not being flowable at any of these temperatures at the pressure of one atmosphere. In contrast, the liquid state denotes flowability so as to take the shape of its container, while having a fixed volume. Instead of flowability, the semi-solid state of the mixture means that it has rigidity, whereby it stays where it is positioned in the battery case. This positioning of the mixture is facilitated by the characteristic of the semi-solid state of the mixture, namely that the mixture is flowable enough under pressure for achieving intimate contact with desired surfaces within the battery pack, e.g. the batteries and/or their connectors. The applied pressure may be only that of a hand trowel used to apply and spread the mixture where desired on the battery and/or connectors to form a coating thereon within a battery pack case. Once applied and the pressure is removed, the semi-solid state of the mixture results in the mixture not flowing away from its applied position at least under the above-mentioned temperatures. Characteristic of the semi-solid state, the mixture has the consistency of wax, dough, or putty, the stiffness of which can be controlled by the proportion of fluorinated composition in the mixture and the molecular weight of the fluorinated composition, insofar as molecular weight affects viscosity of the fluorinated composition by itself.

Preferably, the fluoropolyether by itself is a liquid under the above mentioned temperatures, which means that the fluoropolyether has a boiling temperature greater than the particular maximum temperature from those mentioned above that might be encountered by the battery and battery pack. For simplicity these boiling temperatures can be considered as based on atmospheric pressure (one atm (1MPa)).

The solid state of the fluoropolymer component of the semi-solid mixture differs from the semi-solid state, by exhibiting rigidity, but not the flowability under pressure mentioned above. Thus, the solid fluoropolymer does not have the consistency of wax, dough, or putty. The mixing together of the solid fluoropolymer and liquid fluoropolyether provides the preferred semi-solid state of the resultant mixture. In one embodiment, the solid fluoropolymer by itself resists deformation as indicated by it exhibiting tensile strength of at least 1 MPa (ASTM D638 at 23°C), preferably at least 5MPa. The semi-solid mixture can be considered to exhibit a tensile strength of zero by virtue of inability to form tensile test specimens that have sufficient integrity to be tested for tensile strength.

In these embodiments, the semi-solid mixture provides a unique effect, beyond the fact that each component of the mixture is nonflammable. The fluoropolyether and the destabilizable solid fluoropolymer each contribute to the abatement of combustion. By abatement of combustion is meant that the combustion never occurs even though the corruption of the Li-ion battery is such that the run-away exothermic reaction is expected, or if combustion commences, its intensity is reduced or the fire is very quickly extinguished. Reduced intensity means that when a plurality of Li-ion batteries are present within the case of the battery pack, the combustion tends to be limited to just the corrupted battery, which is then be readily extinguished.

The components of the mixture are stable under the temperatures that might be encountered by the Li-ion battery and battery pack as mentioned above. At higher temperatures, the destabilization of the solid fluoropolymer means that it undergoes decomposition that suppresses combustion. The same is true for the fluorinated composition component of the mixture.

The molecular weight of the fluoropolyether is low relative to the molecular weight of the solid fluoropolymer. The low molecular weight of the fluoropolyether provides high mobility to the composition under the overheating accompanying corruption of the Li-ion battery, thereby facilitating access of the composition to the area of over- heating to abate combustion.

### BRIEF DESCRIPTIPON OF THE DRAWINGS

Fig. 1 is a schematic plan view of an array of four Li-ion batteries, including their electrical interconnection, showing one embodiment of application of the semi-solid mixture of the present invention;
Fig. 2 is a schematic side view of the array of batteries of Fig. 1:
   Fig. 3 is a schematic plan view of a battery pack, lid removed, containing an array of sixteen Li-ion batteries and their electrical interconnection showing another embodiment of application of the semi-solid mixture of the present invention; and
   Fig. 4 is a cross-sectional view of the battery pack of Fig. 3, lid in place, taken along line 4-4 of Fig. 3.

### DETAILED DESCRIPTION OF THE INVENTION

The batteries in Fig. 1 are the jelly-roll type of Li-ion batteries 2, 4, 6, and 8, wherein layers of anode, electrolyte, and cathode are rolled up to form a cylindrical shape housed within a cylindrical can. The electrolyte if not acting as a physical separator between the anode and cathode, will include a separator, within which the electrolyte is absorbed. The anode and cathode can also include current collectors. The anodes of batteries 2 and 4 are electrically connected in parallel by buss 14 and the anodes of batteries 6 and 8 are electrically connected in parallel by buss 16. Buss 18 electrically interconnects busses 14 and 16 in series to form the positive terminal for the battery array as shown by the symbol + in Fig 1. Busses 20 and 22 electrically connect the cathodes of batteries 2 and 4 and 6 and 8, respectively. Buss 24 electrically interconnects busses 20 and 22 to form the negative terminal for the array of batteries as shown by the symbol - in Fig. 1.

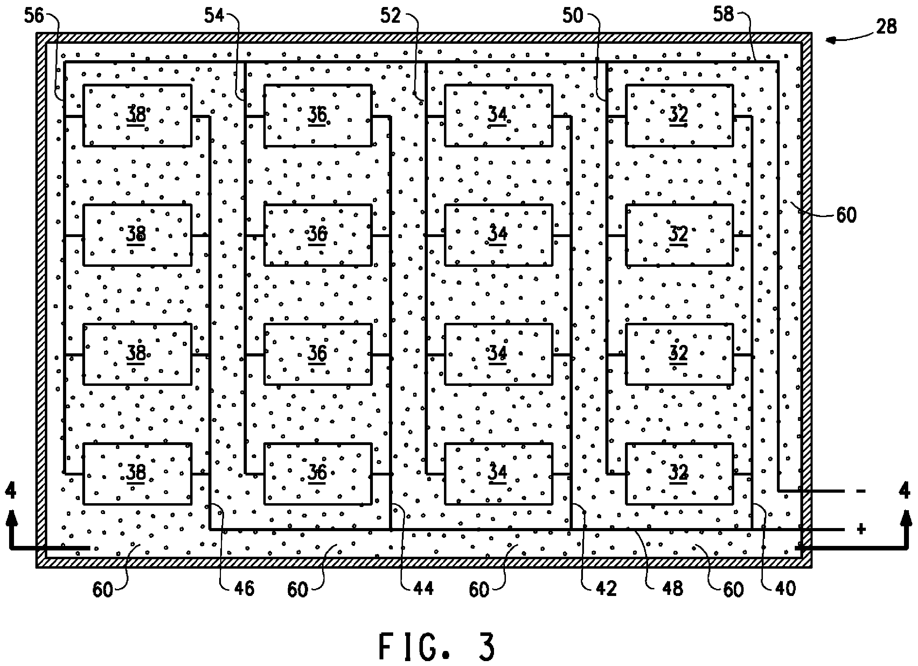

The mixture of the present invention is present as a coating 26 on busses 14, 16, 20, and 22 and their underlying anodes and cathodes as shown in Fig. 1. The coating is formed by applying the mixture to the tops (anodes) and bottoms (cathodes) of the batteries 2, 4, 6, and 8 and pressing the mixture into intimate contact with the current carrying elements on the exterior of each battery. In effect, the coating is formed on both the anode ends and the cathode ends of the batteries and their associated busses as shown in Fig. 2. If desired, the mixture can also be applied to form a coating on the uncovered lengths of busses 18 and 24 shown in Fig. 1. Since the current is concentrated at the anode ends of the batteries and the busses conveying this current to the positive terminal, it is preferred that at least these busses (electrical connectors) be coated by the semi-solid mixture of the present invention. The anodes, cathodes, and busses are all electrical connectors of each battery and the array of batteries. The mixture applied to the conductors and preferably to the battery, such as shown in Figs 1 and 3 should be electrically nonconductive so as not to cause short circuiting.

The Li-ion battery can be any type, including the prismatic Li-ion battery, wherein anode/electrolyte-separator/cathode layers are stacked on top of one another, and the resultant assemblage of many layers of anode/electrolyte-separator/cathode are housed in a foil barrier layer forming the can of the battery. This foil barrier, preventing electrolyte from escaping and isolation from the atmosphere is often referred to as a pouch. A positive and a negative electrode extend from the exterior of the pouch, these forming the electrical interconnection between the layers of anodes and cathodes, respectively, within the pouch.

In another embodiment of the present invention, the mixture is positioned as a coating on the exterior of the pouch at least surrounding the electrodes and on the electrode themselves after their interconnection with the device to be powered by the battery.

The Li-ion battery can be a primary battery or a secondary battery. The feature of rechargeability of the secondary battery makes this a preferred battery for application of the present invention.

Fig. 3 shows an array of sixteen Li-ion batteries 32, 34, 36 and 38 like the batteries of Fig.1, but contained within a case 28 to form a battery pack 30. The anodes of batteries 32 are electrically connected by buss 40, of batteries 34 by buss 42, of batteries 36, by buss 44, and of batteries 38 by buss 46. Busses 40, 42, 44, and 46 are electrically interconnected by buss 48 to provide the positive terminal of the battery pack. The cathodes of batteries 32 are electrically connected by buss 50, of batteries 34 by buss 52, of batteries 36 by buss 54, and of batteries 38 by buss 56. Busses 50, 52, 54, and 56 are electrically interconnected by buss 58 to provide the negative terminal of the battery pack. A coating 60 of mixture of the present invention is formed on all the surfaces of the batteries and their busses as shown in Fig. 3.

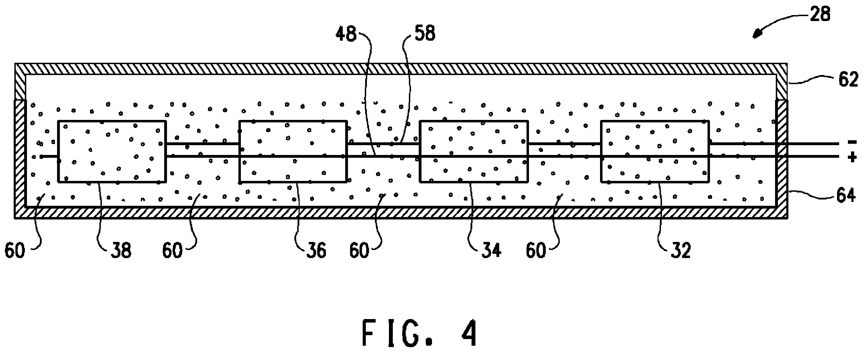

Fig. 4 shows that the battery pack case 28 consists of a bottom receptacle 64, within which the array of batteries of Fig. 3 is positioned, and lid 62 in closure position forming the case 28. The mixture has sufficient depth to enable the mixture to form a coating 60 on all the battery surfaces and their busses within the case 28. One embodiment of obtaining the formation of this coating is to first form a bed of the mixture within the bottom receptacle 64. Then the array of electrically interconnected batteries can be pressed into this bed. The mixture that is forced upwards by this pressing can then be spread to form a coating on any uncoated upwards facing surface (batteries and busses), thereby encapsulating the battery array and its busses within the semi-solid mixture. If the amount of mixture in the bed is insufficient to coat upwards facing surfaces, then additional mixture can be added and spread over any uncoated battery/buss surface. The case 28 can then be closed by addition of the lid 62 to the bottom receptacle 64. Li-ion prismatic batteries can be substituted for the jelly-roll batteries of Figs. 1-4. The mixture need not fill up all the space in within the case as shown in Fig. 4; some empty space can exist. Alternatively, most of not all the space within the case can be filled with the mixture encapsulating the array of batteries.

As is apparent from the above description of positioning of the mixture with respect to batteries and connectors, it is preferred that the mixture be semi-solid to enable intimacy of contact to be achieved, especially over irregularly shaped surfaces or surfaces that are not readily accessible. While the mixture may form a direct coating on one or more of these elements, the coating also be indirect. For example, a battery may have a wrap of inflammable film thereon, and the mixture is formed as a coating on top of the film wrap.

With respect to the destabilizable solid fluoropolymer component of the mixture, preferably semi-solid, the fluoropolymer itself can have a wide variety of identities. In general the fluoropolymer has a carbon atom backbone as the polymer chain: -C-C-C-CC-C-C-C-C-C-Cx-, wherein x is the number of additional carbon atoms present to provide together with the substituents on the polymer chain the molecular weight desired for the fluoropolymer, and making the fluoropolymer solid. Fluoropolymers having molecular weights of at least 50,000 (Mn) are commercially available, making it convenient to use these fluoropolymers in their thermally destabilizable form in the mixture of the present invention. Preferred fluoropolymers are those that are melt-processible tetrafluoroethylene copolymers, for example comprising at least 40-99 mol% tetrafluoroethylene (TFE) derived (by polymerization) repeat units and 1-60 mol% of units derived from at least one other comonomer. Preferred comonomers with TFE to form perfluoropolymers are perfluoroolefins having 3 to 8 carbon atoms, such as hexafluoropropylene (HFP), and/or perfluoro(alkyl vinyl ether) (PAVE) in which the linear or branched alkyl group contains 1 to 5 carbon atoms. Preferred PAVE monomers in these TFE copolymers and those described below are those in which the alkyl group contains 1, 2, or 3 carbon atoms, and the copolymer can be made using several PAVE monomers. Preferred TFE copolymers include FEP (TFE/HFP copolymer and TFE/HFP/PAVE copolymer) and PFA (TFE/PAVE copolymer), wherein PAVE is most preferably perfluoro(ethyl vinyl ether)(PEVE) or perfluoro(propyl vinyl ether)(PPVE), or the combination of perfluoro(methyl vinyl ether)(PMVE) and PPVE, i.e. TFE/PMVE/PPVE copolymer, sometimes referred to as MFA, Less preferred is a fluoropolymer that has -CH2- units in the polymer chain, such as THV (TFE/HFP/VF₂ copolymer). The FEP preferably contains 5 to 17 wt% HFP, the remainder being TFE, with PAVE content if present being 0.2 to 2 wt% based on the total weight of the FEP. The PFA preferably contains at least 2 wt% PAVE, the remainder being TFE, based on the total weight of the PFA.

Preferably, the fluoropolymer is at least 50 wt% fluorine, preferably at least 60 wt%, and more preferably at least 70 w% fluorine, based on the total weight of the polymer chain (excludes end groups). In one embodiment of the present invention, if hydrogen is present in the repeat units making up the polymer chain, it is preferred that hydrogen is only mono-substituted on any of the carbon atoms making up the polymer chain or in any side group bonded to the polymer chain, since the presence of -CH₂- can impair the non-flammability of the fluoropolymer. Preferably, the hydrogen content, if any, is no greater than 2 wt%, more preferably no greater than 1 wt%, most preferably no greater than 0.5 wt%, based on the total weight of the fluoropolymer. A small amount of hydrogen along the polymer chain can have the beneficial effect of thermally destabilizing the fluoropolymer, thereby assisting its combustion abatement effect. In another embodiment of the present invention, the fluoropolymer is a perfluoropolymer. By perfluoropolymer is meant that the monovalent substituents on the carbon atoms forming the polymer chain of the polymer are all fluorine atoms, with the possible exception of end groups.

In contrast to the fluoropolyether in the mixture when the fluoropolyether is by itself in the liquid state, the fluoropolymer is in the solid state at least at the temperatures encountered by the Li-ion battery and its battery pack up to 40°C, sometimes up to 50°C and higher, e.g. up to 60°C and even up to 80°C. at the pressure of one atmosphere. At higher temperatures, the fluoropolymer may melt. Preferably, however, the melting temperature of the fluoropolymer is at least 200°C and not greater than 315°C. Alternatively, the fluoropolymer may be one which softens upon heating, rather than having a distinct melting temperature. In either case, the fluoropolymer is preferably melt flowable. Nevertheless, the fluoropolymer remains solid at the temperatures of the Li-ion battery as mentioned above. The melt flowability can be characterized by a melt flow rate (MF) of at least 0.01 g/10 min, preferably at least 0.1 g/10 min, more preferably at least 5 g/10 min or at least 10 g/10 min, all as measured in accordance with ASTM D 1238, under conditions of melt temperature and weight on the molten polymer that is prescribed for the particular fluoropolymer. For PFA and FEP, the prescribed temperature and weight is 372°C and 5 kg, respectively.

Fluoropolymers are known for their thermal stability, especially arising from the strong chemical bonding between carbon and fluorine atoms predominating in the fluoropolymer. It is common, however, for the as-polymerized fluoropolymer to have thermally unstable moieties, especially unstable end groups, arising from ingredients providing free radicals in the aqueous polymerization medium during the polymerization reaction. A total of at least 300 unstable end groups, more often at least 400 such end groups -COOH, -COF, and/or -CONH₂ per 10⁶ carbon atoms, are present in the as-polymerized fluoropolymer. For example, the common persulfate polymerization initiator in the aqueous polymerization medium results in the formation of carboxyl end groups, -COOH, on the polymer chain. These groups decompose at elevated temperatures, indicating the thermal instability of the fluoropolymer. The decomposition is the splitting off of the carboxyl end groups, leaving behind the reactive group CF₂⁻, which can lead to the formation of a new unstable end group, perfluorovinyl, -CF=CF₂, extending into the polymer chain. Before such destabilizable fluoropolymers are made available by the manufacturer for commercial use, the fluoropolymer is normally subjected to a stabilization process that replaces unstable end groups by stable end groups. For example, FEP is subjected to humid heat treatment at high temperatures to replace unstable end groups by the stable -CF₂H end group. Both FEP and PFA are subjected to fluorination treatment to replace unstable end groups by the stable -CF₃ end group.

The destabilizable solid fluoropolymer used in the present invention is not end-group stabilized, but is instead used in its thermally destabilizable form, i.e. the thermally unstable moieties such as the unstable end groups are present in the fluoropolymer. The heating up by the Li-ion battery caused by such corruption as improper recharging or short circuiting results in the heating of the solid fluoropolymer to cause decomposition of unstable moieties. This decomposition results in non-combustible volatiles being emitted from the fluoropolymer. These volatiles abate combustion, either preventing it from occurring, confining it if it does occur, or instantaneously extinguishing the fire.

A preferred destabilizable fluoropolymer is the FEP mentioned above, but with end groups not being stabilized, so as to possess the unstable end groups mentioned above.

Another embodiment of thermally destabilizable fluoropolymer is the fluoropolymer that contains thermally destabilizable groups, such as -CH₂-CH₂- or -CH₂- in the polymer chain in the small amount as mentioned above that provides thermal decomposition of the fluoropolymer without imparting flammability to the fluoropolymer, in combination with thermally unstable end groups such as disclosed above. A preferred thermally destabilizable fluoropolymer that contains polymer (main) chain thermally instability is the copolymer of TFE, HFP and ethylene, with the amount of ethylene in the copolymer being small to satisfy the preferred maximum hydrogen contents mentioned above. The TFE and HFP contents of the TFE/HFP/ethylene copolymer can be the same as for the FEP dipolymer mentioned above.

The solid destabilizable fluoropolymer is preferably one that becomes flowable under the heating provided by the corrupted Li-ion battery. In the case of fluoropolymers that have a melting temperature, such heating exceeds the melting temperature. The fluoropolymer either softens sufficiently upon such heating that it becomes molten and flowable or melts to become melt flowable. The heating provided by the corrupted battery changes the fluoropolymer from the solid state to the liquid state. This flowing of the fluoropolymer contributes to the exclusion of oxygen from combustible vapors arising from overheated electrolyte, and/or containment of the fire. The melt flow can be sufficient to seal the opening in the battery pack case from which combustible vapors would otherwise escape from the battery case.

The material of construction of the battery pack case can be any material that is nonflammable and provides the strength required for case integrity when subjected to expected use conditions. The fluoropolymer used in the semi-solid mixture can also be a material of construction of the battery pack case, such as case 28 in Figs. 3 and 4. Preferably, however, as the material of construction, the fluoropolymer has a melting temperature of at least 240°C, more preferably at least, 280°C. The preferred fluoropolymer is PFA as described above. The fluoropolymer, when PFA, can be destabilized or have thermally stable end groups and can be used as the only material of construction of the case or as a lining such as of a metal case. Another preferred material of construction of the case or lining is FEP, which is preferably stabilized at least when used as the case material of construction.

With respect to the fluoropolyether component of the semi-solid mixture, in contrast to the fluoropolymer component that is solid, the fluoropolyether by itself is preferably not a solid at the temperatures that might be encountered by the battery and battery pack as mentioned above. It is also not a gas at these temperatures. Preferably, the fluoropolyether by itself is a liquid at these temperatures. This liquid state means that the fluoropolyether in the mixture does not emit volatiles during the temperatures up to 40°C, sometimes up to 50°C, or up to 60°C and even up to 80°C (one atmosphere pressure). The boiling temperature of the fluorinated composition is preferably at least 100°C (one atmosphere pressure).

The liquid state arises from the fluoropolyethers (FPE) having a low molecular weight relative to the molecular weight of the solid fluoropolymer. Preferred fluorinated compositions are the perfluoropolyethers (PFPE). Both polyethers can have any chain structure in which oxygen atoms in the backbone of the molecule are separated by saturated fluorocarbon groups having 1-3 carbon atoms, preferably perfluorocarbon groups. More than one type of fluorocarbon group may be present in the fluorinated composition molecule. Representative structures are

(-CFCF₃-CF₂-O-)ₙ (I)

(-CF₂-CF₂-CF₂-O-)ₙ (II)

(-CF₂-CF₂-O-)ₙ-(-CF₂₋O-)ₘ (III)

(-CF₂-CFCF₃-O-)ₙ-(-CF₂-O-)ₘ (IV)

These structures are discussed by Kasai in J. Appl. Polymer Sci. 57, 797 (1995) and they are commercially available as certain KRYTOX® and FOMBLIN® lubricating oils. Preferably the FPE including the PFPE have a carboxyl group at one end or at both ends of the chain structure of the FPE and PFPE. For monocarboxyl FPE including PFPE, the other end of the molecule is usually perfluorinated but may contain a hydrogen atom. FPE and PFPE having a carboxyl group at one or both ends that can be used in the present invention have at least 2 ether oxygens, more preferably at least 4 ether oxygens, and even more preferably at least 6 ether oxygens, i.e. n in the formulae above is at least 2, 4, or 6 and m in the formulae above is at least 1, 2 or 3. Preferably, at least one of the fluorocarbon groups separating ether oxygens, and more preferably at least two of such fluorocarbon groups, has 2 or 3 carbon atoms. Even more preferably, at least 50% of the fluorocarbon groups separating ether oxygens has 2 or 3 carbon atoms. Also, preferably, the FPE including PFPE has a total of at least 9 carbon atoms. The maximum value of n and m in the formulae above is preferably that which does not exceed the molecular weight at which the composition is liquid under the temperatures that might be encountered by the Li-ion battery and battery pack. While more than one FPE including PFPE can be used in the semi-solid mixture of the present invention, preferably only one such FPE or PFPE is used. The FPE and PFPE are considered a composition, because as commercially available, the FPEs and PFPEs are usually a mixture of FPEs or mixtures of PFPEs, wherein the n or m value given is the average number of n and m groups present in the PFPE.

Especially the PFPEs have high thermal stability, which enables them to be used as high temperature lubricants, even when carboxyl groups are present at one or both ends of the chain structure. The heat provided by the corrupted Li-ion battery, however, causes the decarboxylation of the FPE or PFPE, similar to the decomposition of the solid fluoropolymer having thermally unstable moieties such as carboxyl end groups. Thus, when the FPE or PFPE contains thermally unstable end groups, such as carboxyl, this composition contributes non-flammable volatiles to abate combustion similar to the effect of the destabilizable solid fluoropolymer in the semi-solid mixture.

The mixture of the present invention can be made by mixing together the fluoropolyether, preferably as a liquid, with the solid fluoropolymer in the form of particles, i.e. the solid thermally destabilizable fluoropolymer is particulate. The particles of the fluoropolymer can be those that result from the polymerization process to make the fluoropolymer For example, aqueous dispersion polymerization typically results in the formation of fluoropolymer particles having an average particle size of no greater than 0.5 micrometers as measured by laser light scattering. Recovery of the fluoropolymer particles from the aqueous polymerization medium results in aggregation of the primary particles from the polymerization process to form secondary particles of agglomerated primary particles, the secondary particles typically having an average particle size of 200 to 800 micrometers as measured by laser light scattering (ASTM D 4464). The particle size of solid thermally destabilizable fluoropolymer is preferably that which is effective to produce a homogeneous semi-solid mixture with the fluorinated composition.

The mixing process can be carried out at ambient temperature (15-25°C) for convenience. The mixing can be carried out by hand or by mechanical means The components are added to the mixing vessel and subjected to mixing. Since a solid is being mixed preferably with a liquid, the mixture is complete when no concentration of either component is visible. Instead, a homogeneously appearing mixture, that is preferably semi-solid, is obtained. The fluoropolymer particles will generally have a white color, and the fluoropolyether will be a colorless liquid, with the result being a mixture exhibiting a uniform white appearance.

Solid fluoropolymer is known for its non-stick characteristic, making it useful for non-stick cookware surfaces. Accompanying this characteristic is its incompatibility with other materials. Mixing together fluoropolymer particles with an incompatible liquid will not produce a homogeneous mixture. Instead, the incompatible liquid will simply drain from the fluoropolymer particles. Most organic solvent are incompatible with fluoropolymer, i.e. the particles will not dissolve in such solvents. The fluoropolyether in liquid form is compatible enough with the solid thermally destabilizable fluoropolymer in the form of particles to form a homogeneous mixture i.e. the liquid fluoropolyether does not drain from the mixture.

The proportions of each component in the mixture are adjusted to obtain the deformability of the mixture desired at the time the mixture is formed into a coating on the Li-ion battery (batteries). For given fluoropolymer particles, the proportion of fluoropolyether will vary depending on the molecular weight of the composition as molecular weight affects liquid viscosity. While the coating of semi-solid mixture on the Li-ion battery (or connectors) may stiffen when the battery is used at extremely low temperatures, it is the deformability desired for the process of forming a coating of the semi-solid mixture on the Li-ion battery (batteries) or connectors that is sought in establishing the recipe for the mixture, especially to obtain the preferred semi-solid state for the mixture. For convenience, the coating process can be conducted at ambient temperature (15°-25°C).

Preferably the mixture, preferably semi-solid, comprises 4 to 96 wt% of each of the fluoropolyether and destabilizable solid fluoropolymer components, based on the combined weight of these components to total 100 wt%. On the same basis, preferred proportions are complementally 5 to 95 w% of the fluoropolyether and 95 to 5 wt% of the solid fluoropolymer, 10 to 90 wt% of the fluoropolyether and 90 to 10 wt% of the solid fluoropolymer, 50 to 90 wt% of the fluoropolyether and 50 to 10 wt% of the solid fluoropolymer, and 50 to 85 wt% of the fluoropolyether and 50 to 15 wt% of the solid fluoropolymer.

The thickness of the coating of semi-solid mixture formed on the Li-ion battery is preferably at least 25 micrometers (one mil). In the embodiment of Figs. 3 and 4, a much thicker coating is formed.

By way of example, the Li-ion batteries in the array shown in Fig. 3 are 4.8v each, providing a voltage of 19.2 for the battery pack. The semi-solid mixture comprises tetrafluoroethylene/ hexafluoropropylene copolymer (FEP) having a melt flow rate (MFR) of 30 g/10 min and hexafluoropropylene content of 10 wt%. The copolymer has a molecular weight (Mn) exceeding 50,000 and has a melting temperature of 255°C. The copolymer is in the form of secondary particles having an average particle size of about 300 micrometers. The copolymer is a solid copolymer exhibiting a tensile strength greater than 5 MPa and is thermally destabilizable as indicated by its unstable end group population being greater than 500 unstable end groups/10⁶ carbon atoms, at least 90% of which are -COOH and the remainder comprising -CONH_{2.} The mixture also comprises

CF₃CF₂CF₂-O-(-CFCF₃-CF₂-O-)ₙ-CFCF₃-COOH,

wherein n is an average of 14, providing a molecular weight of about 2500, as the fluoropolyether, which is liquid at ambient temperatures and has a boiling temperature exceeding 100°C. These components are blended together in a 50:50 wt. ratio at ambient temperature and applied by hand troweling to the batteries and connectors (busses) within the battery pack as shown in Figs. 3 and 4. The battery pack is equipped with thermocouples to monitor internal temperature at particular locations within the battery pack. A nail is driven through the battery pack lid to impale one of the Li-ion batteries to case a short circuit. The impaled battery is one that is located adjacent to a thermocouple. The thermocouple reveals that the short circuiting of the battery by the nail is achieved, as the temperature measured by this thermocouple reveals a rapid increase in temperature. Vapor is visible exiting the case. The vapor ignites and it instantaneously doused by the semi-solid mixture coating.

Similar results are obtained when the above-mentioned luoropolyether of 2500 molecular weight is replaced by the fluoropolyether having the same molecular structure but with a greater number of n repeat units to provide a molecular weight of about 7500, the resultant mixture with the FEP being semi-solid in consistency.

Similar results are obtained when the FEP is replaced by tetrafluoroethylene/hexafluoropropylene/ethylene copolymer secondary particles having an average particle size of 300 micrometers , wherein the HFP content is 7.6 wt% and the weight of hydrogen provided by the ethylene copolymerized units is 0.13 wt%. The copolymer also has a smaller amount of hydrogen present (0.006 wt%) as -C₂H₅ end groups derived from using ethane as the chain transfer agent in the polymerization to make the copolymer. The copolymer has a molecular weight (Mn) exceeding 50,000 and an MFR of 30 g/10 sec. The combustion result is similar to that when the FEP is used.

## Claims

1. Mixture (26) for abating the combustion by a Li-ion battery (2, 4, 6, 8), comprising a solid fluoropolymer and a fluoropolyether, said fluoropolyether having oxygen atoms in the backbone of the molecule separated by saturated fluorocarbon groups having 1 to 3 carbon atoms, **characterized in that** the solid fluoropolymer is a thermally destabilizable solid fluoropolymer having at least 300 thermally unstable end groups chosen from -COOH, -COF, and/or -CONH₂ per 10⁶ carbon atoms.

2. The mixture of claim 1 wherein said fluoropolyether is in the liquid phase such that a semi-solid mixture is formed at temperatures up to 80°C when said fluoropolyether is mixed with said solid fluoropolymer, wherein semi-solid means that said mixture is neither a gas nor a liquid at said temperatures.

3. The mixture of claim 1 wherein said fluoropolyether by itself is in the liquid state at temperatures up to at least 40°C.

4. A process for abating the combustion by a Li-ion battery (2, 4, 6, 8), comprising positioning a mixture (26) comprising a solid fluoropolymer with respect to said battery, said mixture being effective to provide said abating by said combustion of said battery, **characterized in that** the solid fluoropolymer is a thermally destabilizable solid fluoropolymer having at least 300 thermally unstable end groups chosen from -COOH, -COF, and/or -CONH₂ per 10⁶ carbon atoms and said mixture (26) further comprises a fluoropolyether having oxygen atoms in the backbone of the molecule separated by saturated fluorocarbon groups having 1 to 3 carbon atoms, said positioning including forming a coating of said mixture on at least a portion of said battery (2, 4, 6, 8).

5. Process of claim 4 wherein said battery has an electrical connector (14, 16, 18, 22) and said positioning includes forming a coating of said mixture at least on said electrical connector.

## Patentansprüche

1. Mischung (26) zum Reduzieren der Verbrennung durch eine Li-Ionenbatterie (2, 4, 6, 8), umfassend ein festes Fluorpolymer und einen Fluorpolyether, wobei der Fluorpolyether Sauerstoffatome in der Rückgratkette des Moleküls aufweist, die durch gesättigte Fluorkohlenstoffgruppen getrennt sind, die 1 bis 3 Kohlenstoffatome aufweisen, **dadurch gekennzeichnet, dass** das feste Fluorpolymer ein thermisch destabilisierbares festes Fluorpolymer ist, das mindestens 300 thermisch unbeständige Endgruppen ausgewählt unter -COOH, -COF und/oder -CONH₂ pro 10⁶ Kohlenstoffatome aufweist.

2. Mischung nach Anspruch 1, wobei der Fluorpolyether sich in der Flüssigphase befindet, derart, dass eine halbfeste Mischung bei Temperatur bis zu 80 °C gebildet wird, wenn der Fluorpolyether mit dem festen Fluorpolymer gemischt wird, wobei halbfest bedeutet, dass die Mischung bei diesen Temperaturen weder ein Gas noch eine Flüssigkeit ist.

3. Mischung nach Anspruch 1, wobei der Fluorpolyether als solcher sich bei Temperaturen bis zu mindestens 40 °C im Flüssigzustand befindet.

4. Verfahren zum Reduzieren der Verbrennung durch eine Li-Ionenbatterie (2, 4, 6, 8), umfassend das Positionieren einer Mischung (26) umfassend ein festes Fluorpolymer, mit Bezug auf die Batterie, wobei die Mischung wirksam ist, das Reduzieren der Verbrennung der Batterie zu bieten, **dadurch gekennzeichnet, dass** das feste Fluorpolymer ein thermisch destabilisiertes festes Fluorpolymer ist, das mindestens 300 thermisch unbeständige Endgruppen ausgewählt unter -COOH, -COF und/oder - CONH₂ pro 10⁶ Kohlenstoffatome aufweist und die Mischung (26) ferner einen Fluorpolyether umfasst, der Sauerstoffatome in der Rückgratkette des Moleküls aufweist, die durch gesättigte Fluorkohlenstoffgruppen getrennt sind, die 1 bis 3 Kohlenstoffatome aufweisen, wobei das Positionieren das Bilden einer Beschichtung aus der Mischung auf mindestens einem Teil der Batterie (2, 4, 6, 8) umfasst.

5. Verfahren nach Anspruch 4, wobei die Batterie einen elektrischen Anschluss (14, 16, 18, 22) aufweist und das Positionieren das Bilden einer Beschichtung aus der Mischung auf mindestens der elektrischen Verbindung umfasst.

## Revendications

1. Mélange (26) d'atténuation de la combustion d'une batterie à ions Li (2, 4, 6, 8), comprenant un polymère fluoré solide et un polyéther fluoré, ledit polyéther fluoré possédant des atomes d'oxygène dans le squelette de la molécule séparés par des groupes fluorocarbonés saturés ayant de 1 à 3 atomes de carbone, **caractérisé en ce que** le polymère fluoré solide est un polymère fluoré solide thermiquement déstabilisable ayant au moins 300 groupes terminaux thermiquement instables choisis parmi le groupe - COOH, -COF, et/ou -CONH₂ pour 10⁶ atomes de carbone.

2. Mélange selon la revendication 1 dans lequel ledit polyéther fluoré se présente en phase liquide de sorte qu'un mélange semi-solide est formé aux températures allant jusqu'à 80°C lorsque ledit polyéther fluoré est mélangé avec ledit polymère fluoré solide, où semi-solide signifie que ledit mélange n'est ni un gaz ni un liquide auxdites températures.

3. Mélange selon la revendication 1 dans lequel ledit polyéther fluoré en lui-même se présente sous l'état solide aux températures allant jusqu'à au moins 40°C.

4. Procédé d'atténuation de la combustion d'une batterie à ions Li (2, 4, 6, 8), comprenant le positionnement d'un mélange (26) comprenant un polymère fluoré solide par rapport à ladite batterie, ledit mélange étant efficace pour fournir ladite atténuation par ladite combustion de ladite batterie, **caractérisé en ce que** le polymère fluoré solide est un polymère fluoré solide thermiquement déstabilisable ayant au moins 300 groupes terminaux thermiquement instables choisis parmi le groupe -COOH, -COF, et/ou - CONH₂ pour 10⁶ atomes de carbone et ledit mélange (26) comprend en outre un polyéther fluoré ayant des atomes d'oxygène dans le squelette de la molécule séparés par des groupes fluorocarbonés saturés ayant de 1 à 3 atomes de carbone, ledit positionnement comprenant la formation d'un revêtement dudit mélange sur au moins une portion de ladite batterie (2, 4, 6, 8).

5. Procédé selon la revendication 4 dans lequel ladite batterie possède un connecteur électrique (14, 16, 18, 22) et ledit positionnement comprend la formation d'un revêtement dudit mélange au moins sur ledit connecteur électrique.
